# EUROPÄISCHE PATENTANMELDUNG

(11) **EP 3 339 634 A1**
(43) Veröffentlichungstag der Anmeldung: **27.06.2018**
(21) Anmeldenummer: 17208999.7
(22) Anmeldetag: 20.12.2017
(51) Int. Cl.: F03D 9/19, F03D 13/25, F03D 80/80

(54) **VERFAHREN ZUR HERSTELLUNG VON BRENNSTOFFEN**

(30) Priorität: 22.12.2016 DE 102016226104; 22.06.2017 DE 102017113856
(71) Anmelder: Carrosapo UG (Haftungsbeschränkt), 70469 Stuttgart (DE)
(72) Erfinder: Ruth, Jürgen, 70469 Stuttgart (DE); Volkens, Wolfgang, 27639 Wurster Nordseeküste (DE); Glashoff, Karsten, 73779 Deizisau (DE); Oberlein, Gerriet, 42553 Velbert (DE)
(74) Vertreter: CPW GmbH

(57) **Zusammenfassung**

Es wird ein Verfahren zur Herstellung von Brennstoffen vorgeschlagen, dass sich dadurch auszeichnet, dass auf sich autonom auf dem Meer beweglichen Schwimmkörpern unter Zuhilfenahme natürlicher Energiequellen zunächst eine Elektrolyse des Meerwasser vorgenommen wird, der dabei entstehende Wasserstoff physikalisch oder chemisch gebunden wird, um ihn selbst als Brennstoff zu nutzen oder ihn mittels an sich bekannter chemischer Methoden zu Brennstoffen weiter zu verarbeiten

## Beschreibung

Die vorliegende Erfindung betrifft ein Verfahren zur Energieerzeugung.

Die Belastung der Umwelt durch Industrie, Privathaushalte und Verkehr hat dazu geführt, dass in den letzten Jahren neue Abgasrichtlinien für Seeschiffe in küstennahen Gewässern erlassen wurden. Die damit einhergehende kostenintensive Bereitstellung von hochwertigen Brennstoffen, die zum Betrieb der Seeschiffe in küstennahen Gewässern nötig sind, als auch das Umrüsten der Schiffsmotoren und Tankanlagen, hat die deutschen Reeder in den letzten Jahren schwer belastet. Zudem ist die Bereitstellung dieser hochwertigen Schiffsbetriebsstoffe an Land - aus lagerlogistischen und versorgungstechnischen Gründen - derzeit nicht in ausreichendem Maße zu gewährleisten, was den Schiffsbetrieb durch zusätzliche Kosten belastet.

Aus diesem Grund wird hier ein Verfahren vorgestellt, welches in besonderer Weise den Bedürfnissen der Seeschifffahrt und den europäischen Anforderungen, insbesondere vor dem Hintergrund zukünftiger Verschärfungen der Abgasvorschriften, gerecht wird.

Bei dem hier beschriebenen Verfahren können die Seeschiffe selbst Teil des Prozesses sein, wobei das Zusammenwirken in besonderem Maße zur Optimierung des hier beschriebenen Verfahrens beiträgt.

Bei diesem Verfahren wird auf autonom im Meer schwimmenden Plattformen Strom durch Windkraft erzeugt. Dieser Strom erzeugt im bordeigenen Elektrolyseur (der bereits unter Druck steht, um die Verdichtung des Wasserstoffgases zu erleichtern) zunächst aus dem Meerwasser Wasserstoff und Sauerstoff. Bereits der auf diese Weise gewonnene Wasserstoff wäre als Brennstoff geeignet.

Allerdings geht das erfindungsgemäße Verfahren weiter. Die zugrundeliegende Idee ist, dass CO₂ (Kohlendioxid) als Verbrennungsrückstand bzw. als sogenanntes "Treibhausgas" im Verfahren eingesetzt wird, um zunächst mittels des durch die Elektrolyse gewonnenen H₂ (Wasserstoff) zu CO (Kohlenmonoxid) reduziert zu werden und sodann unter Verwendung von weiterem H₂ über z.B. die Fischer-Tropsch-Synthese mittels geeigneter Katalysatoren zu flüssigem Brennstoff (Alkane) umgesetzt zu werden.

Bei den schwimmenden Plattformen handelt es sich um so genannte Halbtaucher (HT), die als Forschungsplattformen oder im Rahmen der Erdöl-Gewinnung seit Jahrzehnten auf allen Weltmeeren im Einsatz sind. Die Besonderheit des hier beschriebenen Verfahrens besteht darin, dass die hierbei verwendeten HT-Plattformen zu autonom agierenden Plattformen oder sogenannten Autonomen Halbtauchern (AHT) ausgebaut werden.
Hierbei wird die Plattform mit beweglichen Motoreinheiten (sog. Pot's) ausgerüstet, mit deren Hilfe die Halbtaucher eigenständig navigieren und sich im Wind ausrichten können. Um die somit erzielte Ausrichtung beizubehalten, befindet sich unter Wasser optional eine Stabilisator-Ruderanlage.

Im Gegensatz zu allen bisher bekannten Offshore-Anlagen, die entweder fest am Boden verankert oder am Boden durch Ankerketten befestigt/gehalten werden, ist die hier beschriebene Anlage naturgemäß nicht am Boden verankert.

Der Standortnachteil vieler Anlagen an Land, in Küstennähe oder auf dem Meer montiert besteht darin, dass die Anlagen über Stromkabel-Verbindungen verfügen müssen. Diesem Nachteil begegnet das hier vorgestellte Verfahren dadurch, dass an Bord der HT die erzeugte Energie gewandelt und gebunkert (als z.B. Alkane) wird. Aus diesem Grund ist keine Kabelverbindung zum Land hin notwendig. Weiterhin können diese Anlagen vollständig in Werftbetrieben (also an Land) montiert werden. Nach der Montage können die autonom agierenden Plattformen dann eigenständig ihren Standort auf See anfahren. Für Reparaturen können die Halbtaucher dann Reparaturdockanlagen auf See oder an Land anfahren.

In der hier vorgeschlagenen Verfahrenskette werden weiterhin großvolumige Containerschiffe (ab 8.000 Twenty-foot-Equivalent-Units = TEU) auf langen Zubringerstrecken, z.B. von Hamburg nach Shanghai, mit Fahrzeiten von fünf Wochen und dementsprechenden Bunkerzeiträumen (Tankzyklen) von ca. fünf Wochen betrachtet.

Das Schiffs-Baukonzept soll modular ausgelegt werden (Container-Module), wobei die Abgas-, und weitere Reaktor-, oder Converter-Einheiten in Motornähe bzw. in der Nähe der Abgasanlagen zu positionieren sind.
Diese Container-Module können zum Einbau und/oder zur Wartung (Austausch/Erneuerung) vom Portalkran bewegt werden. Durch diesen modularen Aufbau werden keine zusätzlichen Montagekrane benötigt und gleichzeitig werden die von der Wartung verursachten Liegezeiten minimiert.
Das Konzept erfordert deshalb in den Zielhäfen Montage und Reparaturhallen, in denen die Module gewartet und gelagert werden können.

In dem hier beschriebenen Energiekreislauf wird ein Konzept vorgestellt, welches einerseits dabei hilft, die aktuellen Probleme der Abgasbelastung zu reduzieren (Binden des schädlichen CO₂ Treibhausgases) und andererseits in seiner konzeptionellen Auslegung in der Lage ist, zukünftigen Energiekonzepten (Wasserstoff) als Transportmittel (Power To Liquid [PTL]) zu entsprechen, sprich, diese ebenfalls zu bedienen. Dieses Konzept ist also in der Lage, aktuelle und zukünftige Antriebskonzepte zu unterstützen.

CO₂ ist kein Abfallprodukt und es als Abgas entweichen zu lassen ist energetisch (Wärmerückgewinnung aus Abgaswärme und Kondensationswärme) als auch rohstofftechnisch (Rohstoff als wertvoller Ausgangsstoff der chemischen Industrie) nicht sinnvoll.

Fossile Brennstoffe werden auch in den nächsten Jahrzehnten für kolbenbetriebene Verbrennungsmotoren und somit als klassische CₙH₂ₙ₊₂ Treibstoffkonzepte erhalten bleiben.
Das hier beschriebene Konzept ermöglicht es, sich langfristig unabhängig von fossilen Energieträgern zu machen und gleichzeitig den aktuellen CO₂-Ausstoß massiv zu reduzieren. Außerdem wird mit diesem Kreislauf ein Anreiz dafür geschaffen, das CO₂ auf Dauer zu einem begehrten Rohstoff wird.

In diesem Zusammenhang wird darüber hinaus vorgeschlagen, dass Abgase direkt hinter der Verbrennungskammer verdichtet und verflüssigt werden. Mit diesem Verfahren können bereits am Markt befindliche Verbrennungsmotoren nachgerüstet werden. Dies Verfahren wird auch für Kraftfahrzeuge vorgeschlagen.

### 2. Szenarien:

Die Wahl des Ortes, an dem der Kraftstoff erzeugt wird, ist abhängig vom Transportaufwand der Reaktionskomponenten, als auch der mit dem Transport und der Verarbeitung verbundenen Gefahr.
Weiterhin ist zu berücksichtigen, dass Komponenten zugekauft werden müssen, um den Anteil der nicht zurückführbaren (Verlust-) Reaktanden zu ersetzen.
Es handelt sich also nicht nur um die Komponenten vom Schiff (CO₂) und Halbtaucher (H₂), sondern auch um die zugekauften Komponenten CO₂ aus Fabrikanlagen an Land und ggf. Schweröl.

Hieraus ergeben sich folgende Szenarien.

### Szenario A:

Halbtaucher (HT) mit Fischer-Tropsch-Reaktor (FT-Reaktor) und
Schiffe mit CO₂-Converter (klassisches Schiffs-Antriebskonzept).

Reaktor auf HT, wobei das an Bord erzeugte CO₂ zu den Halbtauchern transportiert werden muss. Im Gegenzug kann bei diesem Vorgang das Schiff mit Treibstoff versorgt werden, der im HAT erzeugt worden ist.

### Szenario B:

HT stellt Energiepakete in Form von Wasserstoff und Sauerstoff bereit.
Die Schiffe sind mit CO₂-Converter und FT-Reaktor (klassisches Schiffs-Antriebskonzept) ausgerüstet.

Der FT-Reaktor befindet sich an Bord eines Schiffes. Hierbei muss der auf dem HT erzeugte Wasserstoff zu den Schiffen transportiert werden. Der Vorteil dieser Version besteht im Transport einer geringeren Volumenmenge, allerdings in besonderen Transportbehältern.

### Szenario C:

HT stellt Energiepakete in Form von Wasserstoff und Sauerstoff bereit.
Schiff mit CO₂-Converter und FT-Reaktor (durch Brennstoffzellen und Elektromotoren erweitertes Schiffs-Antriebskonzept).

Der FT-Reaktor befindet sich an Bord eines Schiffes. Kombination mehrerer Antriebskonzepte bei gleichzeitiger Umwandlung der vom Schweröl erzeugten CO₂-Mengen. Das CO₂ wird in neuen Treibstoff umgewandelt und parallel dazu erfolgt die direkte Erzeugung von Strom durch den bereitgestellten Wasserstoff und Sauerstoff in Brennstoffzellen.

### Szenario D:

Der HT stellt Energiepakete in Form von Wasserstoff und Sauerstoff bereit.
Die Schiffe werden mit Brennstoffzellen und Elektromotoren (neues Schiffs-Antriebskonzept) ausgerüstet.

Verwendung von auf See erzeugter Energie und deren Umwandlung an Bord eines Schiffes in Antriebsenergie. Praktisch ein reines "Brennstoffzellen-Schiff". Wobei die "Energie-Pakete" (Wasserstoff-Sauerstoff) den Schiffen von den HT bereitgestellt werden.

### 5. Technische Ausführung:

An Bord der Halbtaucher-Einheit befinden sich eine Wind-Kraft-Anlage, ein Wasserelektrolyseur, ein Kohlensäure-Erzeuger, ein Fischer-Tropsch-Reaktor, mehrere Tankzellen, Service-, Versorgungs-, und eine Wohneinheit.

### Die Windkraftanlage:

Sie dient der Erzeugung von Strom, welcher an Bord im Elektrolyseur aus Meerwasser, Wasserstoff und Sauerstoff erzeugt.

### Der Fischer-Tropsch-Reaktor:

Aus den an Bord vorhandenen Rohstoffen kann nach dem Verfahren von z.B. Fischer-Tropsch, flüssiger Brennstoff hergestellt werden. Das CO₂ als auch der Brennstoff werden in bordeigenen Tanks eingelagert.

### Projekt autonom fahrender Schiffe:

Die autonomen HT-Einheiten werden in internationalen Gewässern, fern der See-Schifffahrts-Wasserstraßen (Sicherheit) satellitengestützt positioniert und von Land aus gesteuert. Die auf See herrschenden Winde, und in den Weltmeeren bekannten Meeresströmungen, werden hierbei sinnvoll genutzt. Die Positionierung erfolgt deshalb nicht nur unter dem Gesichtspunkt der optimalen Windausbeute, sondern auch um optimale Wetterlagen zu nutzen oder die Windkraftanlagen ggf. zyklisch kreisen zu lassen.

Dieses zyklische Kreisen kann bei der Wartung, dem Be- und Entladen der Tankinhalte, als auch der Bereitstellung von Treibstoff für Schiffe auf dem Meer und der Wartung oder Reparaturen der Anlagen, insbesondere in abgelegenen Regionen, dienen.

### Der Kohlensäure-Erzeuger:

Weiterhin befinden sich an Bord der Schiffe eine Kohlensäure-Erzeuger-Einheit, eine CO₂-Waschanlage, eine Verdichteranlage sowie Speichertanks.

Bei der CO₂ Rückgewinnungsanlage handelt es sich um ein adsorptives Verfahren, bei dem CO₂-Moleküle aus ihrer gasförmigen Umgebung gezielt herausgelöst werden. Dies geschieht mit speziell beschichteten Oberflächen, an denen sich die Moleküle so anlagern, dass sie hier ohne großen technischen Aufwand entfernt und eingesammelt werden können.
Das Zusammenspiel von Pufferspeichern, Verdichtern, Adsorptionskammern und Wärmeüberträgern ermöglicht, dass das rückgewonnene Kohlendioxid bereitsteht und anschließend sofort für neue Prozesse verwendet werden kann.

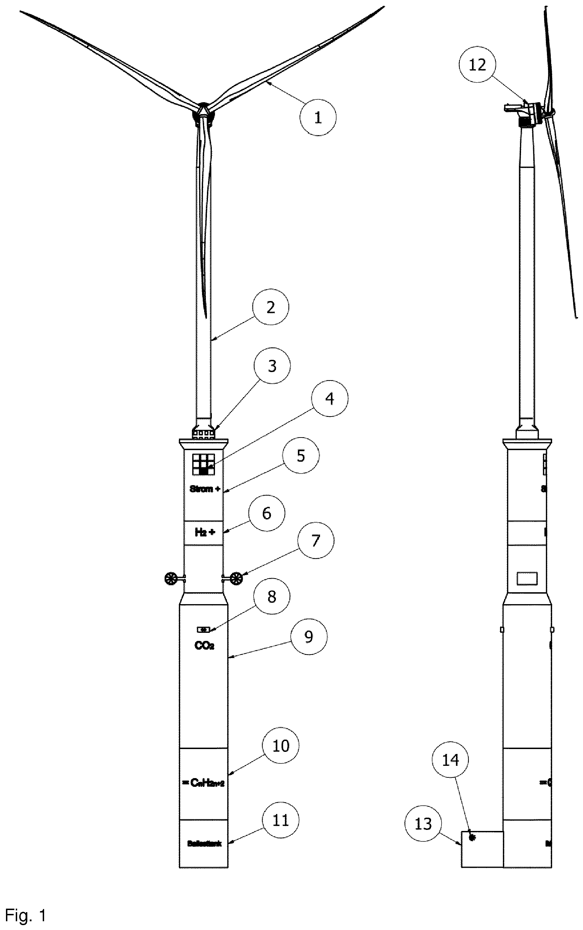

**Fig. 1** zeigt einen Halbtaucher zur Durchführung des erfindungsgemäßen Verfahrens.

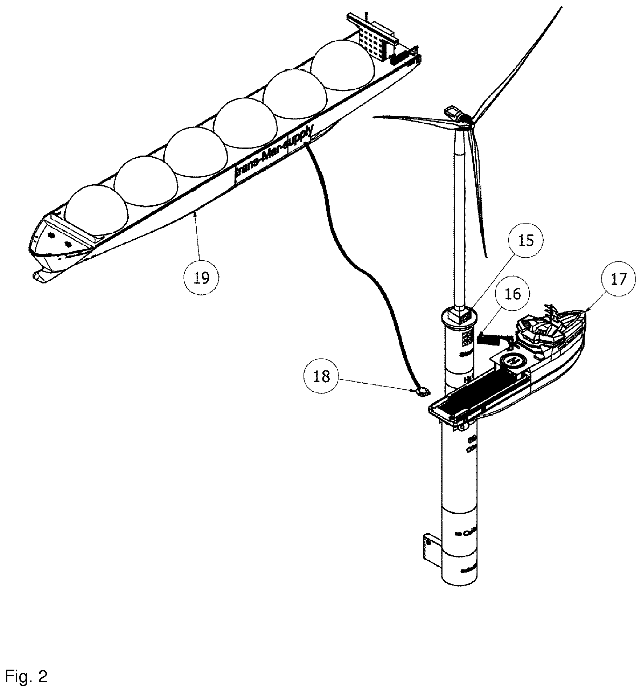

**Fig. 2** zeigt schematisch das Andocken von Versorgungsschiffen an den Halbtaucher. Die vom vorderen Schiff transportierten Container können Betriebsstoffe als auch Reaktor-Module enthalten. Bei dem hinteren Tankschiff erfolgt die Betankung exemplarisch durch einen Tankschlauch-Tauchroboter.

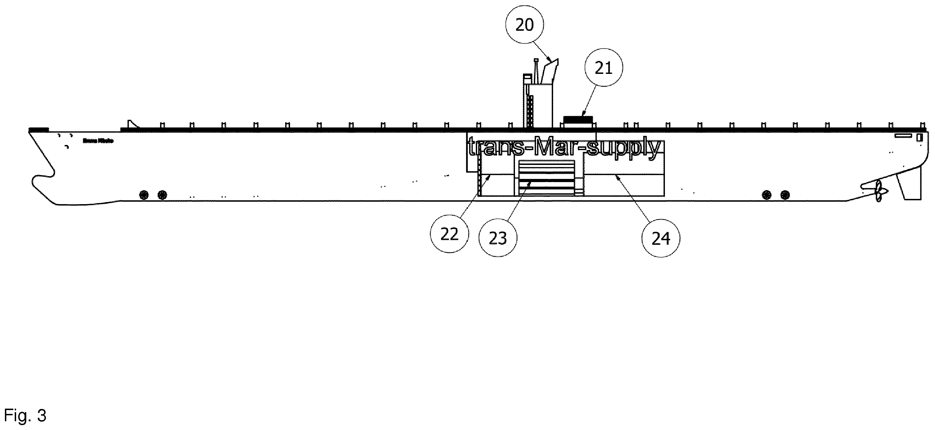

**Fig. 3** zeigt schematisch die Lage und Dimension der Kraftstoff- und SpeicherTanks in einem Container-Schiff, im Verhältnis zur Container-Ladekapazität.

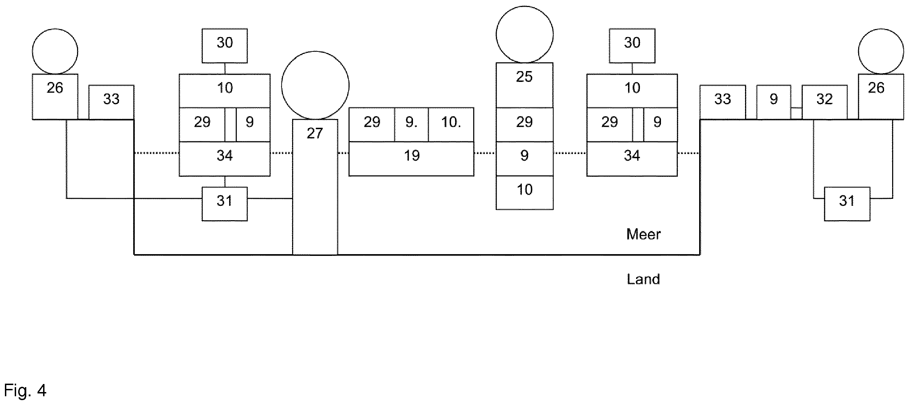

**Fig. 4** zeigt die im Text ausführlich beschriebenen Szenarien A bis D.

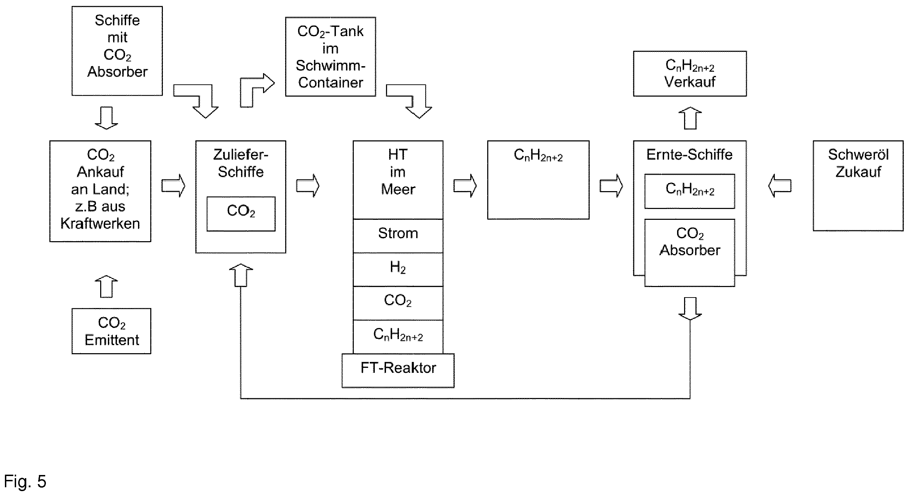

**Fig. 5** zeigt die Wertstoff-Flüsse der Szenarien A bis D (die energetischen als auch die durch die Zubringerdienste bereitgestellten).

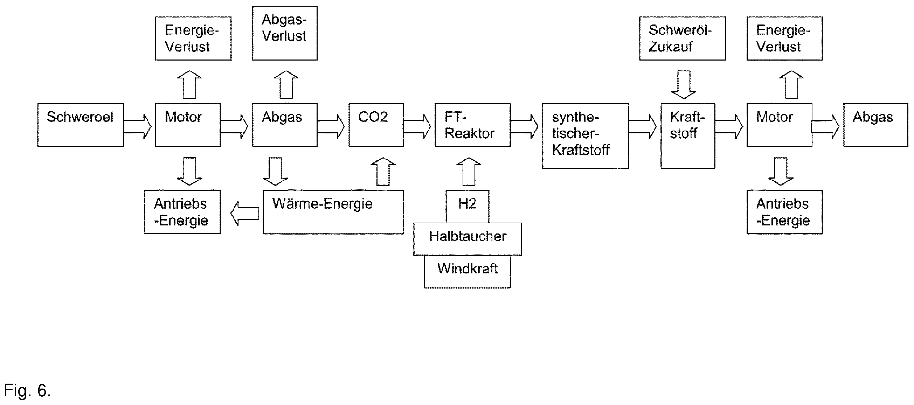

**Fig. 6** zeigt den Energie-Kreislauf und die Energiebilanz bei aktuell verwendeten Verbrennungsmotoren. Hier werden nur die wesentlichen Energiepakete aufgeführt. Wesentlich an dieser Darstellung ist die Gegenüberstellung von Energie-Verlusten und zugeführten Energien. Energie-Verluste, wie diese bei Motoren und Antrieben durch Reibung, Abgaswärme usw. üblich sind, und Energien, die kompensatorisch durch Windenergie bereitgestellt werden können. Diese Bilanzierung macht deutlich, dass der Verlust durch den Zukauf von Energieträgern wie CO₂, oder auch den übergangsweisen Zukauf von Schweröl kompensiert werden kann.

- 1.: Windrad
- 2.: Mast
- 3.: Versorgungs-, Mannschafts-, Technikergebäude
- 4.: Container-Modul-Rack
- 5.: Verteiler
- 6.: Wasserstofftanks
- 7.: Propellergondel
- 8.: Unterwassertankstutzen
- 9.: CO₂-Tanks
- 10.: CₙH₂ₙ₊₂ Tanks
- 11.: Ballasttanks
- 12.: Generatorgondel
- 13.: Finne
- 14.: Strahlruder
- 15.: SPAR-Plattform
- 16.: Container-Modul
- 17.: Versorger
- 18.: Tank-Tauch-Roboter
- 19.: Tankschiff
- 20.: Containerschiff
- 21.: Container-Modul
- 22.: Schweröltanks
- 23.: Schiffsmotor
- 24.: CO₂-Tanks
- 25.: Halbtaucher
- 26.: Onshore-Windkraftanlage
- 27.: Offshore-Windkraftanlage
- 28.: Fischer-Tropsch-Reaktor
- 29.: H₂
- 30.: Tankstelle
- 31.: Stromkabel
- 32.: CO₂-Emittent
- 33.: Hafenanlage
- 34.: Schwimm-Plattform

## Patentansprüche

1. Verfahren zur Herstellung von Brennstoffen, **dadurch gekennzeichnet, dass** auf sich autonom auf dem Meer beweglichen Schwimmkörpern unter Zuhilfenahme natürlicher Energiequellen zunächst eine Elektrolyse des Meerwasser vorgenommen wird, der dabei entstehende Wasserstoff physikalisch oder chemisch gebunden wird, um ihn selbst als Brennstoff zu nutzen oder ihn mittels an sich bekannter chemischer Methoden zu Brennstoffen weiter zu verarbeiten.

2. Das Verfahren nach Anspruch 1, **dadurch gekennzeichnet, dass** es sich bei den Schwimmkörpern um Halbtaucher handelt.

3. Das Verfahren nach einem oder mehreren der vorhergehenden Ansprüche, **dadurch gekennzeichnet, dass** die Schwimmkörper mit Windrädern ausgerüstet sind, um den Wind als Energiequelle zu nutzen.

4. Das Verfahren nach einem oder mehreren der vorhergehenden Ansprüche, **dadurch gekennzeichnet, dass** der Wasserstoff zusammen mit CO₂ mittels Fischer-Tropsch-Synthese weiter verarbeitet wird.

5. Das Verfahren nach einem oder mehreren der vorhergehenden Ansprüche, **dadurch gekennzeichnet, dass** es sich bei dem CO₂ um sogenanntes Treibhausgas handelt.

6. Das Verfahren nach einem oder mehreren der vorhergehenden Ansprüche, **dadurch gekennzeichnet, dass** es sich bei den Brennstoffen um Kohlenwasserstoffe handelt.

7. Das Verfahren nach einem oder mehreren der vorhergehenden Ansprüche, **dadurch gekennzeichnet, dass** der Abtransport der erhaltenen Brennstoffe und/oder die Lieferung des CO₂ -Mittel durch Schiffe erfolgt.
